(19) **Europäisches Patentamt**
**European Patent Office**
**Office européen des brevets**

(11) **EP 3 006 410 B1**

(12) **FASCICULE DE BREVET EUROPEEN**

(45) Date de publication et mention de la délivrance du brevet:
**29.08.2018 Bulletin 2018/35**

(51) Int Cl.:
***C03B 5/185*** *(2006.01)*    *C03B 5/04* *(2006.01)*
*C03B 5/182* *(2006.01)*

(21) Numéro de dépôt: **15194588.8**

(22) Date de dépôt: **28.09.2010**

(54) **UTILISATION D'UN FOUR POUR LA FUSION DE VERRE, NOTAMMENT DE VERRE CLAIR OU ULTRA-CLAIR, AVEC RÉDUCTION DE LA RECIRCULATION PRIMAIRE**

VERWENDUNG EINES OFEN ZUM SCHMELZEN VON GLAS, INSBESONDERE KLARGLAS UND ULTRAKLARGLAS, MIT REDUZIERUNG DER PRIMÄREN REZIRKULATION

USE OF A FURNACE FOR MELTING GLASS, IN PARTICULAR CLEAR OR ULTRA-CLEAR GLASS, WITH REDUCTION OF PRIMARY RECIRCULATION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.09.2009 FR 0904657**

(43) Date de publication de la demande:
**13.04.2016 Bulletin 2016/15**

(62) Numéro(s) de document de la (des) demande(s) initiale(s) en application de l'article 76 CBE:
**10765679.5 / 2 483 211**

(73) Titulaire: **Fives Stein**
**94700 Maisons Alfort (FR)**

(72) Inventeurs:
• **Kuhn, Wolf Stefan**
  **91540 FONTENAY LE VICOMTE (FR)**
• **Tabloul, Samir**
  **92120 MONTROUGE (FR)**

(74) Mandataire: **IPAZ**
**16, rue Gaillon**
**75002 Paris (FR)**

(56) Documents cités:
**GB-A- 2 093 820     LU-A1- 77 649**
**US-A- 3 208 841     US-A- 4 852 118**

**Description**

L'invention est relative à un four de verre à double courroie de recirculation pour le chauffage, la fusion et l'affinage de matières à vitrifier, four du genre de ceux qui comprennent :

- une entrée pour les matières premières,
- une superstructure équipée de moyens de chauffage,
- une cuve contenant un bain de verre en fusion sur lequel un tapis de matières premières flotte depuis l'entrée jusqu'à une certaine distance à l'intérieur du four,
- une sortie par laquelle est évacué le verre en fusion.

L'invention concerne plus particulièrement, mais non exclusivement, un four pour verre clair ou ultra-clair.

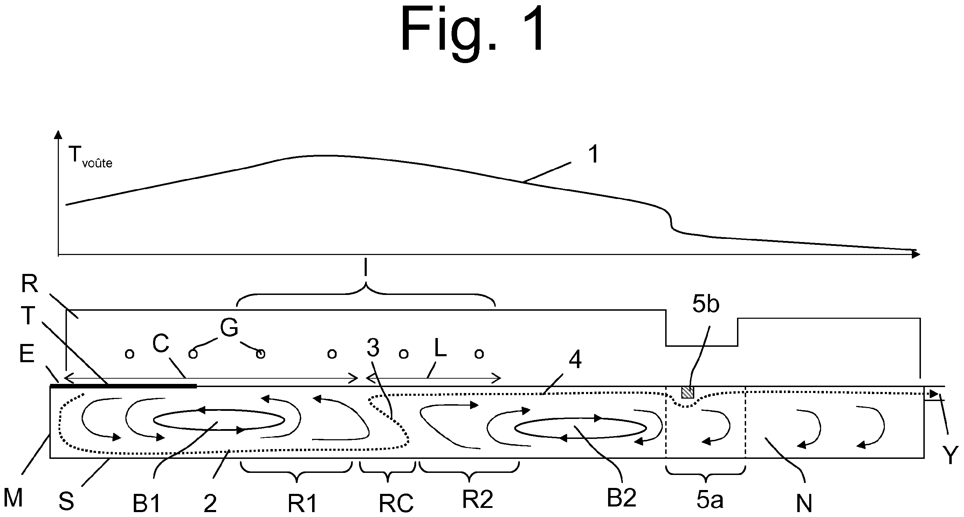

En se reportant au schéma de Fig. 1 des dessins annexés, on peut voir un four de verre flotté classique avec une entrée E pour les matières premières, une superstructure R équipée de brûleurs G, une cuve M dont la sole S supporte un bain N de verre en fusion sur lequel un tapis T de matières premières flotte depuis l'entrée, et une sortie Y. Au-dessus du four, l'évolution de la température de la face chaude de la voûte $T_{voûte}$, de la superstructure R, suivant la longueur du four, est portée en ordonnée sur Fig. 1 et est représentée par la courbe 1 dont le maximum se trouve dans la zone centrale I du four.

Deux boucles de recirculation du verre liquide B1, B2, se forment dans le bain entre une zone centrale I du four plus chaude et respectivement l'entrée E et la sortie Y à une température moindre. Selon Fig.1, la recirculation dans la boucle B1 primaire s'effectue en sens contraire d'horloge : le verre en surface s'écoule de la zone I vers l'entrée E, descend vers la sole et revient en partie basse du bain vers la zone centrale I pour remonter vers la surface. La recirculation dans la boucle secondaire B2 a lieu en sens inverse, c'est-à-dire dans le sens d'horloge. Ces deux boucles de recirculation influent sur l'écoulement principal de la tirée du four. Elles modifient la forme et la durée de passage de l'écoulement principal en fonction de leur intensité.

Le trajet de l'écoulement principal le plus court, correspondant au temps de séjour le plus faible, critique pour la qualité du verre extrait du four, est schématisé par la courbe en tirets 2 selon laquelle le verre, près de l'entrée, se déplace au voisinage de la sole S, puis remonte selon un parcours plus ou moins sinueux 3 entre les deux boucles de recirculation pour se déplacer ensuite sur une trajectoire 4 au voisinage du niveau supérieur du bain vers la sortie Y. A la remontée 3 correspond une zone de résurgence centrale RC comprise entre les deux boucles B1, B2 et leur zones de résurgences R1 et R2. Le point de retournement de l'écoulement du verre à la surface du bain marque la séparation surfacique des résurgences R1 et RC. La distance comprise entre l'entrée du four et ce point de retournement définit la longueur C représentée sur la Fig. 1, représentative de l'étendue de la boucle B1. Il peut être déterminé expérimentalement ou par simulation numérique. La qualité d'affinage du verre est déterminée par la partie initiale de la trajectoire 4. Sur cette partie initiale, le verre est maintenu à une température supérieure à la température de l'affinage (environ 1450°C pour le verre sodocalcique) pendant un certain laps de temps. Le temps de séjour dans la partie initiale de la trajectoire 4 est donc déterminant pour la qualité du verre produit. Ce temps de séjour est donné par la longueur L de la zone à température située au-dessus d'environ 1450°C pour le verre sodocalcique et par la vitesse de l'écoulement du verre. Cette vitesse d'écoulement du verre est liée à la tirée obtenue à la sortie du four et à l'intensité de la recirculation B2.

On vise donc à maximiser le temps de séjour d'"affinage" pour améliorer la qualité du verre, ou à augmenter la tirée du four à qualité constante. La prolongation du temps de séjour peut être obtenue par un ralentissement de la recirculation secondaire, ce qui permet également de diminuer la consommation du four. Ainsi, un étranglement de la largeur des fours appelé corset 5a a été prévu depuis un certain nombre d'années dans les fours à verre flotté. Dans ce corset 5a on peut utiliser, en plus, un barrage 5b refroidi à l'eau qui ralentit davantage la recirculation.

Un autre moyen connu pour prolonger le temps de séjour d'"affinage" est de décaler la zone de résurgence centrale RC en modifiant le profil longitudinal de température de la combustion. Le point le plus chaud du profil 1 est ainsi décalé vers l'entrée du four. Néanmoins, la compétition hydrodynamique des deux boucles de recirculation B1 et B2 impose des limites pour ce décalage.

Les solutions de l'état de la technique évoquées ci-dessus sont relativement satisfaisantes pour du verre ordinaire mais demeurent insuffisantes pour du verre ultra-clair.

Trois problèmes majeurs émergent lors de la fusion du verre ultra-clair :

1. dégradation de la qualité d'affinage du verre,
2. augmentation de la corrosion des parois internes de la cuve M
3. augmentation de la température à la sole, avec risque de corrosion accrue.

Pour pallier à ces problèmes, lors du passage du verre clair au verre ultra-clair dans un four à verre flotté, on est forcé de baisser la tirée de 10 à 15 %.

Pour conserver les positions de résurgence et le temps d'affinage, on se sert parfois pour du verre standard d'une rangée de bouillonneurs ou d'un mur anti-retour placés dans la zone de résurgence RC sur la sole. Or, les bouillonneurs renforcent la circulation et augmentent la température de la sole, déjà critique pour le verre ultra-clair. La corrosion constitue également un point critique pour le mur.

Pour résoudre le problème de la température élevée à la sole des fours pour le verre ultra-clair, et pour réduire cette température, on opte habituellement pour une plus grande profondeur h du bain de verre en fusion. La profondeur de la cuve est ainsi portée à environ 1.4 à 1.8 m. Mais une augmentation de la profondeur favorise la recirculation notamment pour le verre ultra-clair. Une augmentation de l'intensité de la recirculation réduit en règle générale le temps de séjour le plus court dans les fours de fusion malgré une augmentation du volume de verre. L'augmentation du coût de la cuve et une prolongation du temps de changement de teinte du verre sont d'autres désavantages liés à l'augmentation de la profondeur.

Un autre moyen connu par l'homme du métier pour limiter la température de la sole consiste à moins l'isoler thermiquement pour favoriser l'évacuation de la chaleur et limiter sa température.

On connaît les documents GB-A-2093820, US-A-3208841, US-A-4852118 et LU-A-77649 qui décrivent tous des fours. Aucun de ces documents ne traite du ralentissement de la boucle primaire ni du raccourcissement de son étendue.

L'invention a pour but, surtout, de fournir un four de verre à double boucle de recirculation qui ne présente plus ou à un degré moindre les inconvénients rappelés ci-dessus et qui, notamment, permet une qualité d'affinage élevée, non seulement pour le verre ultra-clair mais aussi pour le verre clair et ordinaire.

Selon l'invention, il est proposé l'utilisation d'un four de verre du genre défini précédemment, dans lequel le four, la cuve, l'entrée, la sortie et les moyens de chauffage sont configurés pour que deux boucles de recirculation du verre en fusion se forment dans le bain entre une zone centrale du four plus chaude et respectivement l'entrée et la sortie à une température moindre, caractérisé en ce que l'utilisation comporte un apport calorifique au verre de retour circulant au niveau de la sole propre à ralentir la boucle de recirculation primaire et raccourcir son étendue, ledit apport calorifique étant localisé dans le verre de retour, la diminution de la viscosité du verre restant faible et influant peu sur la résistance par friction à l'écoulement du verre.

La réduction de la longueur de la boucle de recirculation primaire permet, pour une même longueur de four, de prolonger la zone d'affinage L de sorte d'améliorer la qualité du verre.

L'augmentation de la tirée d'un four donné conduit à une prolongation de la boucle B1. L'invention permet de réduire cette prolongation de sorte de conserver la durée d'affinage du verre. Il est tout d'abord décrit un moyen de ralentissement du débit dans la boucle de recirculation primaire B1 qui comprend une réduction de la profondeur moyenne de la cuve dans la zone de la boucle de recirculation B1 par rapport à celle dans la zone de résurgence centrale du verre.

De préférence, le moyen de ralentissement du débit dans la boucle de recirculation primaire comprend une inclinaison de la sole sensiblement depuis l'entrée vers l'intérieur du four, sur une distance correspondant à 20-100%, et de préférence 50%, de la longueur de la boucle de recirculation primaire représenté par la longueur C, de sorte que la profondeur de la sole augmente depuis l'entrée du four vers l'intérieur. La distance de 50% correspond sensiblement à l'étendue du tapis.

La diminution de la profondeur de la sole depuis l'intérieur du four vers l'entrée des matières premières est avantageusement réalisée de manière discontinue, en particulier avec des marches successives, de hauteur réduite, notamment inférieure à 25 cm.

Lorsque la variation de profondeur est obtenue par des marches, celles-ci peuvent être chanfreinées.

En variante, la diminution de la profondeur de la sole depuis l'intérieur du four vers l'entrée des matières premières peut être continue, selon un plan incliné.

Avantageusement, le moyen de ralentissement est constitué par une inclinaison, continue ou par marches, de la sole sensiblement depuis l'entrée vers l'intérieur du four sur une distance correspondant sensiblement à l'étendue du tapis.

Selon une autre variante, la diminution de la profondeur de la sole depuis l'intérieur du four vers l'entrée des matières premières est obtenue par la présence d'un ou plusieurs obstacles placés sur la sole, notamment une ou plusieurs saillies transversales.

Un chauffage électrique avec des électrodes classiques est avantageusement prévu dans le bain de verre en fusion sous le tapis.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :

Fig. 1 est une coupe schématique verticale d'un four de verre flotté classique.

Fig. 2 est une coupe verticale schématique partielle du tapis et du bain de fusion pour l'établissement d'un bilan thermique local simplifié,

Fig. 3 est une coupe verticale schématique partielle d'un four

Fig. 4 est une coupe verticale schématique partielle d'une variante de four et

Fig. 5 est une coupe verticale schématique partielle d'un four qui est utilisé dans le cadre de l'invention et qui comprend un apport calorifique par des électrodes au verre de retour.

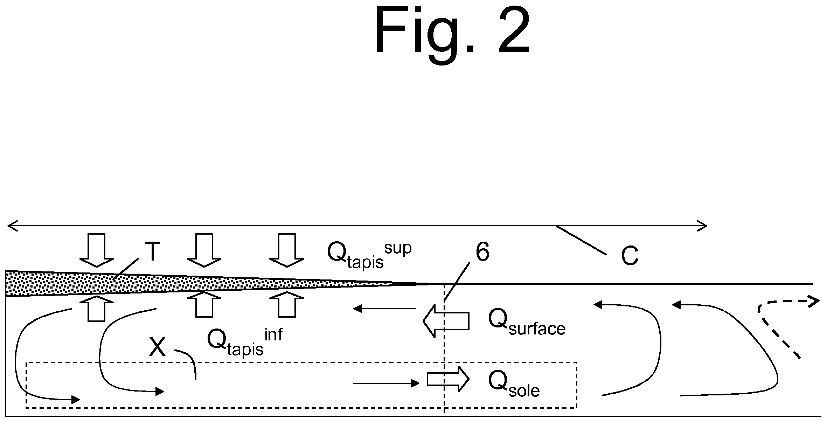

D'après le schéma de Fig. 2, il apparait que l'énergie totale $Q_{tapis}$ pour la fusion du tapis T est apportée :

- soit directement à la surface supérieure du tapis par le rayonnement de la combustion, sous la forme $Q_{tapis}^{sup}$,
- soit indirectement par conduction et convection du verre sous la surface inférieure du tapis selon l'expression $Q_{tapis}^{inf}$

d'où la relation :

$$Q_{tapis} = Q_{tapis}^{sup} + Q_{tapis}^{inf}$$

Le rapport $Q_{tapis}^{inf}/Q_{tapis}$ est difficile à déterminer, aussi bien par mesure que par modélisation, mais il est plutôt inférieur à 50 %.

L'apport de chaleur à la face inférieure du tapis est donné par conduction et convection et cause le refroidissement du verre sous le tapis. Le verre en surface amène une certaine quantité de chaleur qui est ensuite consommée par la face inférieure du tapis.

Entre consommation par le tapis et apport de chaleur par recirculation du verre, il existe un équilibre pour respecter la conservation des flux thermiques :

$$Q_{tapis}^{inf} = \Delta Q_{rec},$$

relation dans laquelle $\Delta Q_{rec}$ est égal à la perte d'énergie du verre. Cette perte d'énergie correspond à la différence d'énergie du verre qui, par suite de la recirculation, entre dans, puis sort d'une zone du bain située sous le tapis T. Cette zone sous le tapis prise en compte pour notre bilan thermique local simplifié est délimitée par une limite fictive 6. Evidemment, il convient de prendre également en compte les pertes thermiques des parois dans le bilan thermique de la zone délimitée. Le verre proche de la surface franchit la limite 6 de la droite vers la gauche selon Fig. 2 en ayant une énergie Q surface. Il se refroidit sous le tapis T, pour ensuite descendre vers la sole et ressortir de la gauche vers la droite avec une énergie $Q_{sole}$.

On peut ainsi écrire :

$$\Delta Q_{rec} = Q_{surface} - Q_{sole}$$

Avec :

$Q_{surface}$ égal à l'énergie du verre entrant dans la zone située sous le tapis T $Q_{sole}$ égal à l'énergie du verre sortant de cette zone, la différence correspondant à la chute de la température du verre en recirculation.

Cette différence d'énergie peut également être exprimée par la relation

$$\Delta Q_{rec} = \dot{m} \cdot c_p \cdot \Delta T$$

Avec :

- $\dot{m}$ correspond au débit massique du verre dans la boucle de recirculation primaire B1,
- $c_p$ correspond à la capacité calorifique ou chaleur spécifique du verre,
- $\Delta T$ = différence de température entre le courant entrant et sortant dans la zone sous le tapis.

Les quantités exactes des flux thermiques du verre par convection sont en principe à calculer à partir des intégrations des profils d'écoulement et des champs de températures dans le plan de la limite fictive 6 - ce qui n'est pas représenté ici pour conserver la clarté de la description.

Le débit de verre issu de la fusion du tapis étant faible comparé au débit de recirculation, il est négligé par la suite de sorte de simplifier la description.

Selon l'invention, on diminue le débit $\dot{m}$ par un moyen de ralentissement de la recirculation du verre.

On peut réécrire la formule précédente sous la forme :

$$\dot{m} = \Delta Q_{rec} / c_p \cdot \Delta T$$

Cette formule montre qu'une diminution du débit de recirculation par un moyen de ralentissement géométrique de l'écoulement selon l'invention peut avoir deux conséquences :

- La valeur de $\Delta Q_{rec}$ diminue ce qui conduit à une diminution de la vitesse du verre sous le tapis ce qui conduit à une réduction du flux thermique $Q_{tapis}^{inf}$,

- La valeur $\Delta T$ augmente ce qui conduit sous le tapis à une diminution de la température du verre qui plonge vers la sole.

En pratique, ces deux phénomènes se combinent également avec le mécanisme de transfert de chaleur dans le tapis pour conduire à la nouvelle valeur $Q_{tapis}^{inf}$.

Une description détaillée de la complexité de la fusion d'un tapis figure par exemple dans le livre « Mathematical simulation in glass technology », Springer 2002, Eds, D.Krause, H.Loch, au chapitre 2.2, pages 73-125. Une description simplifiée de ces phénomènes est développée ci-dessous.

La quantité d'énergie $Q_{tapis}^{inf}$ consommée par la face inférieure du tapis T dépend, de manière complexe, du flux thermique par conduction et convection du verre directement en-dessous du tapis. On ne connaît pas a priori la contribution de la convection par rapport à la conduction. La conduction thermique du verre peut être représentée par une conduction effective selon l'approximation Rosseland qui intègre la contribution du rayonnement dans la conduction. Le verre clair et notamment ultra-clair présentent des valeurs très élevées de cette conduction effective et donc un flux thermique élevé en présence de gradients thermiques. Il est donc nécessaire de vérifier si la convection du verre joue encore un rôle important dans le transfert d'énergie sous le tapis.

L'intensité de la convection peut être exprimée par le nombre de Péclet Pe, qui représente le rapport entre flux thermique par convection et flux par conduction:

$$Pe = v \cdot L_{car}/\alpha$$

v désigne la vitesse moyenne du courant du verre entrant sous le tapis T, et $L_{car}$ désigne une longueur caractéristique du système en l'occurrence la longueur du courant de verre parcourue sous le tapis.

$\alpha$ désigne la diffusivité thermique qui est proportionnelle à la conductivité ($\alpha$= conductivité effective / densité $\times$ $c_p$) et dépend du matériau, en l'occurrence du verre et est élevé pour le verre clair ou ultra-clair. Il n'est guère possible d'agir sur ce paramètre.

En principe, il est nécessaire de formuler le nombre de Péclet en 2 dimensions pour comparer des flux de convection et de conduction perpendiculaires tels que sous le tapis - ce qui n'est pas représenté ici pour conserver la clarté de la description.

Pour les paramètres et dimensions typiques des grands fours verriers tels que les fours de verre flotté on trouve des valeurs de Péclet en une dimension largement supérieurs à 10. Pour le verre clair ou ultra-clair, la convection de la boucle de recirculation joue donc toujours un rôle dominant pour le transport de chaleur sous la face inférieure du tapis.

Une légère diminution du débit de recirculation, et donc de la vitesse, ne change pas le mode de transfert de chaleur sous le tapis qui reste dominé par la convection. Néanmoins, une diminution du débit de recirculation diminue le flux de chaleur dans le tapis $Q_{tapis}^{inf}$. Nous comprenons à présent qu'une diminution du débit de recirculation et de la vitesse sous le tapis diminue à la fois la valeur de $Q_{tapis}^{inf}$ et de l'apport par recirculation $\Delta Q_{rec}$. Le bilan thermique est ainsi respecté.

Une diminution de $Q_{tapis}^{inf}$ entraîne une prolongation du tapis plus ou moins importante.

Il est nécessaire de compenser toute diminution d'apport calorifique sur la face inférieure $Q_{tapis}^{inf}$ par une augmentation de celui-ci sur la face supérieure $Q_{tapis}^{sup}$ pour conserver l'énergie totale $Q_{tapis}$ nécessaire pour la fusion du tapis. Une adaptation de la distribution de la puissance des brûleurs pourra être prévue pour renforcer le flux thermique sur la face supérieure $Q_{tapis}^{sup}$. Ce renforcement du flux thermique pourra être réalisé par d'autres moyens comme l'oxy-boosting ou des flammes verticales impactantes.

Selon l'invention, le four comporte un moyen de ralentissement du débit de la boucle de recirculation primaire. Les deux boucles de recirculation du verre B1 et maire. Les deux boucles de recirculation du verre B1 et B2 sont en compétition hydrodynamique. La position de la zone de séparation entre les deux boucles dépend du rapport de leurs intensités. Une diminution de l'intensité de la boucle B1 conduit à un déplacement de la zone de séparation vers l'entrée du four et donc une réduction de l'étendue de la longueur C. Dans le cas d'un four à coulée continue, l'écoulement principal du verre crée une zone de résurgence centrale RC intercalée dans la zone de séparation entre les deux boucles de recirculation B1 et B2. La réduction de la boucle B1 conduit à un décalage vers l'entrée du four de la zone de résurgence RC. Après la zone de résurgence, l'écoulement principal suit la trajectoire 4.

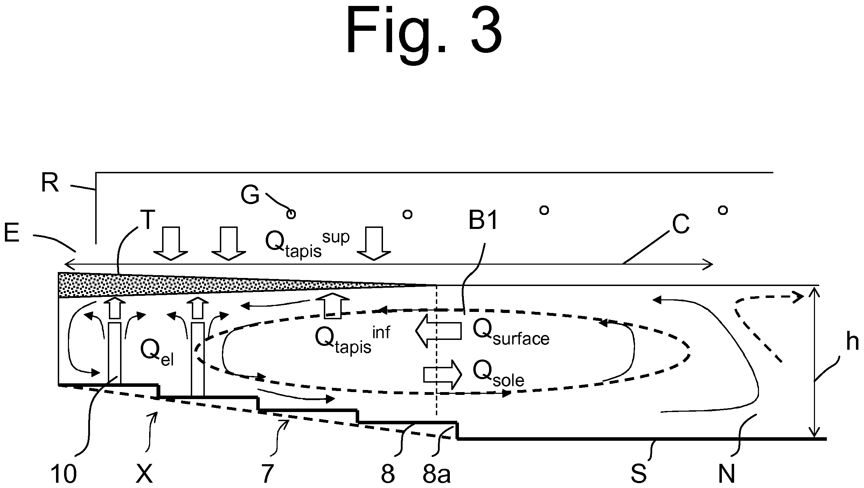

Dans la première partie de cette trajectoire 4 est réalisé l'affinage du verre. Si on maintient la température de l'affinage sur une longueur L prolongée correspondant au décalage de la position de la résurgence RC, cela conduit à prolonger la zone d'affinage d'où une meilleure qualité du verre. Il est tout d'abord décrit un moyen de ralentissement du débit de la boucle de recirculation primaire, ce moyen étant constitué par une diminution de la profondeur obtenue par des marches successives ou qui peut être réalisée par gradins à l'aide de plusieurs marches 8 de faible hauteur, généralement de hauteur inférieure à 25 cm (Fig.3).

Selon un autre exemple de réalisation visible sur Fig. 3, la sole 7 est inclinée de manière continue du haut vers le bas depuis l'entrée E jusqu'à une zone située environ à la verticale de l'extrémité du tapis T.

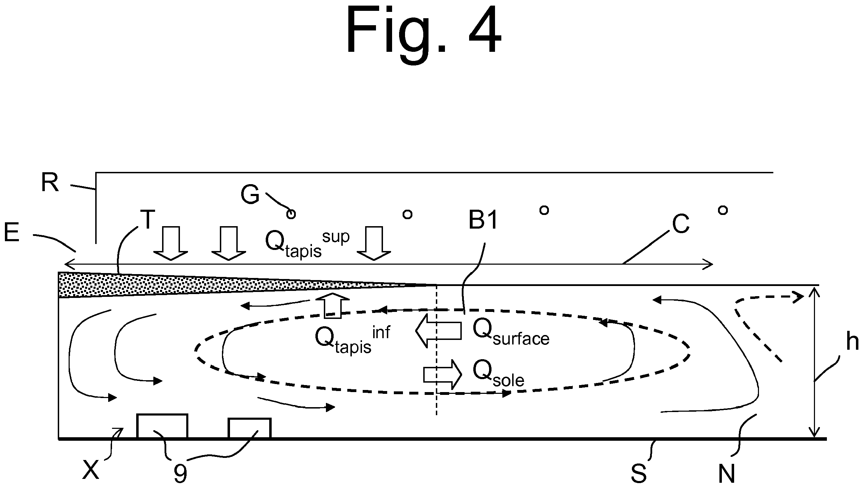

Selon un autre exemple de réalisation visible sur Fig. 4, la sole reste horizontale jusqu'au-dessous de l'entrée et comprend une ou plusieurs saillies verticales 9, par exemple sur toute sa largeur. De préférence, les saillies 9 sont positionnées sous le tapis. Il est néanmoins nécessaire de veiller à ne pas créer de zone morte ou trop froide dans le verre pour éviter des problèmes éventuels de qualité.

Les marches 8 peuvent être éventuellement chanfreinées au niveau de leur nez 8a pour réduire l'effet de la corrosion sur les marches. Une corrosion des marches ne peut pas nuire à la qualité car le verre en contact avec la sole dans cette zone est ensuite forcé à remonter dans la zone d'affinage par la résurgence centrale.

Dans le cas du verre ultra-clair, il est habituel de réduire le taux d'isolation thermique de la sole de sorte de réduire la température de la sole. La mise en oeuvre selon l'invention d'un frein géométrique conduit également à une augmentation plus ou moins importante du $\Delta T$, donc à une diminution de la température de la sole. La combinaison d'une moindre isolation et d'un frein géométrique diminue notablement le risque de corrosion des réfractaires de la sole.

Si la diminution de l'apport de chaleur sur la face inférieure du tapis $Q_{tapis}^{inf}$ s'avère importante, et si un complément à la face supérieure n'est pas suffisant pour compenser, le tapis risque de se prolonger au-delà de la zone souhaitée.

Dans ce cas, un apport calorifique doit être réalisé sur la face inférieure du tapis, notamment par des électrodes classiques 10, de sorte de renforcer l'échange thermique en face inférieure du tapis. L'apport calorifique des électrodes 10 vient principalement compléter celui apporté par la convection du verre de sorte de maintenir la valeur de $Q_{tapis}^{inf}$.

Le renforcement électrique de chauffage réalisé avec des électrodes 10 servira dans ce cas à compléter l'apport de chaleur sur la face inférieure.

$$Q_{tapis}^{inf} = \Delta Q_{rec} + Q_{el}$$

L'apport d'énergie par le boosting électrique directement sous le tapis permet donc de limiter une prolongation du tapis.

Avantageusement, on prévoit dans le four, à proximité de l'enfournement E, par exemple au niveau des premières marches 8, un chauffage électrique ou « boosting » de renforcement avec au moins deux électrodes 10 implantées verticalement sur deux marches de la sole. Le courant électrique circule d'une électrode à l'autre dans le verre en fusion et provoque son échauffement. Un écoulement local s'établit autour des électrodes. Il a pour effet de renforcer l'échange thermique avec le tapis. L'écoulement global de la boucle de recirculation B1 reste dominant sous le tapis. La sole inclinée, notamment avec des marches multiples 8, permet :

- une sole maîtrisable en construction et lors de l'attrempage par le maintien de la liaison mécanique directe des blocs réfractaires pour exercer une poussée horizontale nécessaire à la fermeture des joints,
- peu de risques de corrosion.

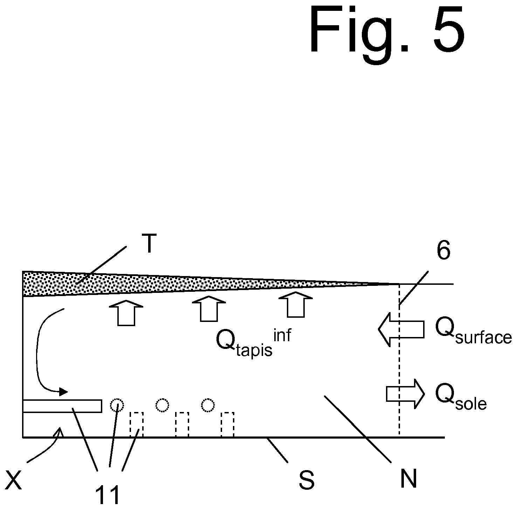

La Fig.5 représente un exemple de réalisation de l'invention basé sur un nouvel équilibre du bilan thermique de la boucle B1.

Il est caractérisé en ce que le ralentissement du débit dans la boucle de recirculation primaire est obtenu par un apport calorifique au verre de retour circulant au niveau de la sole.

L'apport calorifique selon cette variante de réalisation est avantageusement combiné à une diminution de la profondeur de la sole.

La recirculation de la boucle B1 est engendrée par la convection naturelle, ou thermoconvection, liée à un différentiel entre la température moyenne du verre sous le tapis et celle dans la zone de résurgence R1.

Si on rehausse la température du verre après son refroidissement par le tapis, par un apport calorifique localisé, on diminue le différentiel de température et donc le moteur de la boucle de recirculation B1.

La température du verre à la sole intervient donc sur la compétition hydrodynamique des deux boucles de recirculation B1 et B2 et la position de la résurgence centrale RC. Ainsi, un verre plus chaud à la sole permet de diminuer l'étendue de la boucle de recirculation B1.

La diminution du débit de recirculation ne peut être obtenue que si la diminution de la viscosité du verre, par l'augmentation de la température du courant de retour, reste faible et influe peu sur la résistance par friction à l'écoulement du verre. Pour du verre ultra-clair et l'élévation de température visée, la variation de viscosité du verre est relativement faible ce qui permet effectivement de réduire le débit de recirculation B1.

Comme représenté en Fig.5, l'apport calorifique est localisé dans le verre de retour au-dessus de la sole.

L'apport calorifique peut être réalisé, notamment, par des électrodes 11 implantées horizontalement. Elles peuvent également être implantées verticalement mais avec une hauteur limitée.

Lors de l'implantation des électrodes, il faut veiller à ne pas créer des points chauds dans le verre de sorte d'éviter de créer une thermoconvection verticale trop intense, en ayant une bonne répartition du champ électrique des électrodes.

Avantageusement, l'apport calorifique selon l'invention est d'environ 10% de l'énergie de recirculation $\Delta Q_{rec}$ correspondant également à la consommation d'énergie du tapis sur sa face inférieure.

Pour un four de verre flotté d'une tirée de 400 t/j, l'apport calorifique sera ainsi d'environ 0.5 MW. Il sera réparti sur une dizaine d'électrodes.

Cette solution selon l'invention est notamment intéressante si la sole est constituée de réfractaires ayant une très bonne résistance à la corrosion en raison de la légère augmentation de la température de la sole.

En cas d'affaiblissement du transfert de chaleur $Q_{tapis}^{inf}$ lié à la réduction de la boucle de recirculation, l'apport calorifique est renforcé sur la face supérieure du tapis de sorte de maintenir la longueur du tapis.

La hauteur h moyenne de verre sous la première boucle de recirculation peut être inférieure d'au moins 5% par rapport à celle dans la zone de résurgence RC du verre.

Le chauffage électrique avec électrodes 10 est prévu dans le bain de verre de sorte de renforcer l'échange thermique en face inférieure du tapis et/ou un apport calorifique supplémentaire est prévu en face supérieure du tapis T. Un moyen X de ralentissement du débit de recirculation assurant une diminution de la vitesse du verre sous le tapis T, peut être réalisé de diverses manières, par exemple :

- diminution de profondeur du four dans la zone de la boucle primaire ;
- diminution de profondeur du four seulement sous le tapis T ;
- une ou plusieurs saillies 9 sur la sole dans la zone de la boucle primaire ;
- selon l'invention, par un apport calorifique au verre de retour au-dessus de la sole.

La solution de l'invention présente, pour du verre ordinaire ou clair, mais notamment ultra-clair :

- une diminution du débit de recirculation de la boucle primaire B1 ;
- une réduction de l'étendue C de la ladite boucle en faveur de la boucle secondaire B2 ;
- un maintien ou une prolongation du temps d'affinage dans la boucle secondaire B2.

**Revendications**

1. Utilisation d'un four de verre pour le chauffage et la fusion de matières à vitrifier, le four comprenant :

   - une entrée (E) pour les matières premières,
   - une superstructure (R) équipée de moyens de chauffage (G),
   - une cuve (M) contenant un bain de verre en fusion sur lequel un tapis (T) de matières premières flotte depuis l'entrée jusqu'à une certaine distance à l'intérieur du four,
   - une sortie (Y) par laquelle est évacué le verre en fusion,

   les moyens de chauffage étant configurés pour que deux boucles (B1, B2) de recirculation du verre en fusion, respectivement primaire et secondaire, se forment dans le bain (N) entre une zone centrale (I) du four plus chaude et respectivement l'entrée (E) et la sortie (Y) à une température moindre, **caractérisée en ce que** l'utilisation comporte un apport calorifique au verre de retour circulant au niveau de la sole propre à ralentir ladite boucle de recirculation primaire (B1) et raccourcir son étendue (C), ledit apport calorifique étant localisé dans le verre de retour, la diminution de la viscosité du verre restant faible et influant peu sur la résistance par friction à l'écoulement du verre.

2. Utilisation selon la revendication selon la revendication 1, dans laquelle l'apport calorifique est réalisé au moyen d'électrodes (11).

3. Utilisation selon la revendication 2, dans laquelle les électrodes sont implémentées horizontalement ou verticalement, mais avec une hauteur limitée.

4. Utilisation selon la revendication 1 à 3, dans laquelle l'apport calorifique selon l'invention est d'environ 10% de l'apport de chaleur par recirculation du verre.

**Patentansprüche**

1. Anwendung eines Glasofens zum Erhitzen und Schmelzen von zu verglasenden Stoffen, wobei der Ofen folgendes umfasst:

   - einen Eingang (E) für die Rohstoffe,

   - einen mit Heizmitteln (G) versehenen Aufbau (R),
   - eine Wanne (M) mit Glasschmelze, in der ein Teppich (T) aus Rohstoffen vom Eingang bis zu einer bestimmten Entfernung in das Innere des Ofens schwimmt,
   - einen Ausgang (Y), über den das flüssige Glas abfließt,

   wobei die Heizmittel so gestaltet sind, dass sich in der Glasschmelze (N) zwischen einem heißeren zentralen Bereich (I) des Ofens und dem jeweils weniger heißen Eingang (E) und Ausgang (Y) zwei Kreise (B1, B2, jeweils ein primärer und ein sekundärer Kreis, für die Rezirkulation des flüssigen Glases bilden, **dadurch gekennzeichnet, dass** dem rückfließenden Glas in Höhe der Ofensohle Wärme zugeführt wird, welche den besagten primären Rezirkulationskreis (B1) verlangsamt und dessen Ausdehnung (C) verkürzt, wobei besagte Wärmezufuhr im rückfließenden Glas erfolgt, wobei sich die Viskosität des Glases nur wenig verringert und beim Fließen des Glases nur wenig Einfluss auf den Reibungswiderstand nimmt.

2. Anwendung nach Anspruch 1, in welcher die Wärmezufuhr über Elektroden (11) erfolgt.

3. Anwendung nach Anspruch 2, in welcher die Elektroden horizontal oder vertikal, jedoch in begrenzter Höhe installiert sind.

4. Anwendung nach Anspruch 1 bis 3, in welcher die Wärmezufuhr gemäß Erfindung ca. 10% der über die Glasrezirkulation erfolgende Wärmezufuhr beträgt.

**Claims**

1. Use of a glass furnace for heating and melting vitrifiable substances, with said furnace comprising :

   - one inlet (E) for the raw materials,
   - one superstructure (R) provided with heating means (G),
   - one tank (M) containing a molten glass bath whereon a layer (T) of raw materials floats from the inlet to some distance inside the furnace,
   - one outlet (Y) through which the molten glass is discharged,

   with the heating means being so configured that two, respectively primary and secondary, molten glass recirculating loops (B1, B2) are formed in the bath (N) between one central area (I) of the furnace, which is hotter, and, respectively, the inlet (E) and the outlet (Y) which are at a lower temperature,

**characterized in that** the use comprises the supply of heat to the return glass circulating on the floor likely to slow down said primary recirculating loop (B1) and shorten the length (C) thereof, with said supply of heat being localized in the return glass, and with the reduction in the glass viscosity remaining low and having little influence on the frictional resistance to the glass flow.

2. Use according to claim 1, wherein heat is supplied by electrodes (11).

3. Use according to claim 2, wherein the electrodes are positioned horizontally or vertically, but with a limited height.

4. Use according to claims 1 to 3, wherein the heat supply according to the invention represents about 10% of the heat supply by glass recirculation.

# Fig. 1

EP 3 006 410 B1

Fig. 2

Fig. 3

# Fig. 4

EP 3 006 410 B1

EP 3 006 410 B1

# Fig. 5

$Q_{tapis}^{inf}$

$Q_{surface}$

$Q_{sole}$

T

6

X

11

S

N

## RÉFÉRENCES CITÉES DANS LA DESCRIPTION

**Documents brevets cités dans la description**

- GB 2093820 A
- US 3208841 A
- US 4852118 A
- LU 77649 A

**Littérature non-brevet citée dans la description**

- Mathematical simulation in glass technology. Springer, 2002, 73-125